# EUROPÄISCHE PATENTSCHRIFT

(11) **EP 2 670 575 B1**
(45) Veröffentlichungstag und Bekanntmachung des Hinweises auf die Patenterteilung: **21.03.2018**
(21) Anmeldenummer: 12701002.3
(22) Anmeldetag: 25.01.2012
(51) Int. Cl.: B29C 45/67

(54) **SCHLIESSVORRICHTUNG FÜR EINE SPRITZGIESSMASCHINE**
CLOSING DEVICE FOR AN INJECTION MOLDING MACHINE
DISPOSITIF DE FERMETURE POUR UNE MACHINE DE MOULAGE PAR INJECTION

(30) Priorität: 04.02.2011 DE 102011010347
(43) Veröffentlichungstag der Anmeldung: 11.12.2013
(73) Patentinhaber: KraussMaffei Technologies GmbH, 80997 München (DE)
(72) Erfinder: PIHAN, Volker, 82327 Tutzing (DE); KRABICHLER, Georg, 85276 Pfaffenhofen (DE); AMMER, Daniel, 81735 München (DE)
(74) Vertreter: Wilhelm, Ludwig
(86) Internationale Anmeldenummer: PCT/EP2012/051159
(87) Internationale Veröffentlichungsnummer: WO 2012/104184

(56) Entgegenhaltungen:
- DE-A1- 1 930 163
- DE-A1- 2 024 070
- DE-B- 1 155 885
- US-A- 5 135 385
- US-A1- 2010 166 909

## Beschreibung

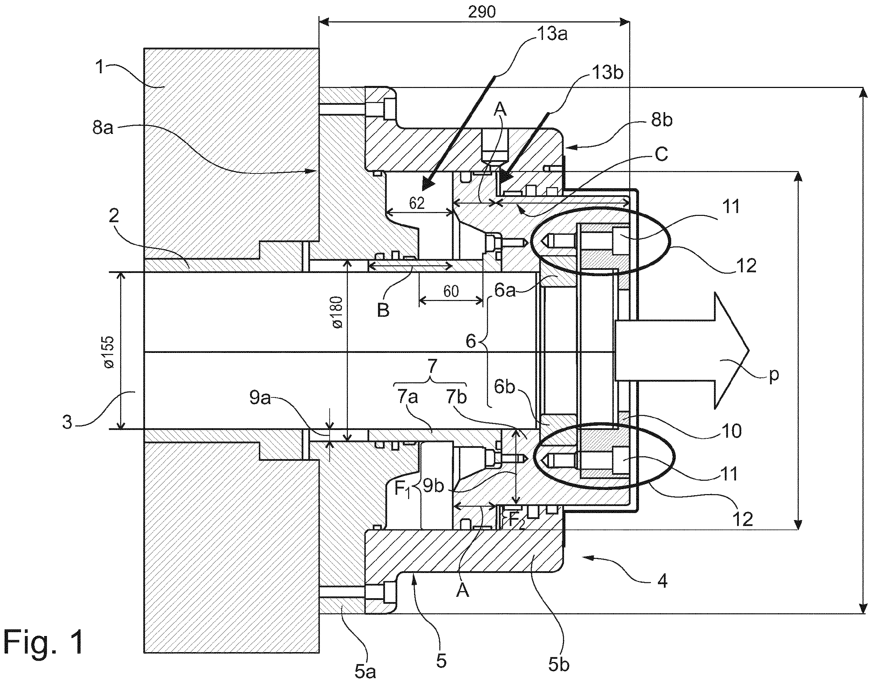

Die Erfindung betrifft eine Schließvorrichtung für eine Spritzgießmaschine gemäß dem Oberbegriff von Patentanspruch 1. Derartige Schließvorrichtungen sind aus den Dokumenten DE 19 30 163 A1, DE 11 55 885 B und US 5 135 385 A bekannt. Weitere Schließvorrichtungen sind in Form von Zwei-Platten-Schließvorrichtungen und von Drei-Platten-Schließvorrichtungen aus dem Stand der Technik bekannt. Die DE10316199A1 sowie das Buch von Johannaber, Michaeli, "Handbuch Spritzgießen", Hanser 2001, Seiten 837 und 838, Bilder 7.95, 7.96 und 7.99 offenbaren Ausführungsformen von Zwei-Platten-Schließvorrichtungen mit vier Druckkissen an den Säulen. Die Druckkissen können an der feststehenden oder an der beweglichen Formaufspannplatte vorgesehen sein. Aus der DE102004005686A1 ist eine Drei-Platten-Schließvorrichtung mit vier Druckkissen an den Säulen bekannt, wobei die vier Druckkissen an der feststehenden Formaufspannplatte oder an der Abstützplatte vorgesehen werden können.
Bei den Schließvorrichtungen gemäß dem vorgenannten Stand der Technik erweist es sich als schwierig, eine oder mehrere Säulen aus der Schließvorrichtung auszubauen, um beispielsweise einen besseren Zugang in den Raum zwischen den beiden Formaufspannplatten zu erhalten. Für den Ausbau einer Säule ist das gesamte Druckkissen von der Formaufspannplatte zu entfernen und zusammen mit der Säule von dieser Formaufspannplatte weg zu verfahren. Hierzu ist eine ausreichende Länge der Leitungen für das Hydrauliköl erforderlich.
Ausgehend von diesem Stand der Technik liegt der Erfindung die Aufgabe zugrunde, eine Schließvorrichtung anzugeben, bei der eine oder mehrere Säulen aus- und eingebaut werden können, ohne dass das zugehörige Druckkissen mit entfernt werden muss.

Diese Aufgabe wird durch eine Schließvorrichtung mit Merkmalen von Anspruch 1 gelöst. Vorteilhafte Ausgestaltungen und Weiterentwicklungen finden sich in den abhängigen Ansprüchen.

Dadurch, dass bei einem oder mehreren der Druckkissen der Zylinder an seinen beiden Stirnseiten jeweils eine Öffnung aufweist, deren Durchmesser größer ist als der Durchmesser der diesem Druckkissen zugeordneten Säule, wobei zwischen der Säule und dem Zylinder im Bereich der beiden Stirnseiten des Zylinders jeweils ein Ringspalt gebildet wird, und dass eine Hülse vorgesehen ist, durch welche die Säule hindurchführbar ist, wobei die Hülse mit der Säule lösbar verbindbar ist, wobei die Hülse einen Abschnitt aufweist, welcher den Kolben bildet, und wobei die Hülse zu beiden Seiten des Kolbens jeweils einen Endabschnitt aufweist, der sich bis in einen der Ringspalte hinein erstreckt, kann die Säule von dem Druckkissen ohne Öffnung der Druckräume getrennt werden. Die Hülse ist Bestandteil des Druckkissens und hält das Hydrauliköl von der Säule fern.

Die Hülse kann vorzugsweise formschlüssig mit der Säule verbindbar sein, wobei die Hülse aus mehreren miteinander verbindbaren Teilen aufgebaut ist. Hierbei kann ein erstes Teil der Hülse den Kolben und einen der beiden Endabschnitte bilden und ein zweites Teil der Hülse kann den anderen der beiden Endabschnitte bilden.

In einer besonders bevorzugten Ausführungform kann die Säule an einem Ende ein Kopfstück mit einem größeren Durchmesser als die Säule selbst aufweisen, wobei auf der einen Seite des Kopfstücks die Hülse vorgesehen ist und auf der anderen Seite des Kopfstücks ein mit der Hülse verbindbares Fixierelement. Im verbundenen Zustand liegt somit eine formschlüssige Verbindung zwischen Hülse, Kopfstück und Fixierelement vor. Dadurch wird es möglich, dass lediglich das Fixierelement von der Hülse entfernt werden muss, um nachfolgend die Säule aus der Hülse und damit aus dem Druckkissen herausziehen zu können. Der Einbau der Säule erfolgt selbstverständlich in umgekehrter Reihenfolge, d.h. die Säule wird durch die Hülse und die zugehörige Platte der Schließeinheit hindurch geschoben. Das Kopfstück kann von zwei halben Ringen gebildet werden, die in eine in der Säule vorgesehene Ringnut eingesetzt und untereinander verbunden sind. Es muss also lediglich eine entsprechende Ringnut in die Säule eingearbeitet werden. Alternativ können aber auch mehrere Ringnuten in der Säule vorgesehen werden, ähnlich wie dies bei Verriegelungssystemen mit zwei halbschalenförmigen Verriegelungsbacken der Fall ist. In diesem Fall werden anstelle der halben Ringe zwei Halbschalen vorgesehen, die jeweils mehrere halbkreisförmige Vorsprünge aufweisen, die passend zu einer entsprechenden Anzahl und Form von Ringnuten in der Säule ausgebildet sind. Die Halbschalen werden mit ihren Vorsprüngen in die Ringnuten eingesetzt und untereinander verbunden, um das Kopfstück der Säule zu bilden.
Um den Ölbedarf möglichst niedrig halten zu können, können zu beiden Seiten des Kolbens zwei kreisringförmige mit Druckmittel beaufschlagbare Flächen unterschiedlicher Größe vorgesehen werden, wobei die größere der beiden Flächen zur Erzeugung einer Schließkraft und die kleinere der beiden Flächen zur Erzeugung einer Aufreißkraft vorgesehen sind. Grundsätzlich können die beiden Flächen aber auch die gleiche Größe aufweisen. Die vorliegenden Erfindung bezieht sich auf Zwei-Platten-Schließvorrichtungen mit einer feststehenden Formaufspannplatte und mit einer beweglichen Formaufspannplatte. Die Druckkissen sind an einer der beiden Formaufspannplatten und Verriegelungselemente an der anderen der beiden Formaufspannplatten vorgesehen. Nachfolgend soll die Erfindung anhand eines Ausführungsbeispiels und unter Bezugnahme auf die einzige Figur näher beschrieben werden.

Die einzige Figur zeigt eine Platte 1 einer Schließeinheit, bei der es sich beispielsweise um die feststehende Formaufspannplatte einer Zwei-Platten-Schließeinheit handeln kann. Durch die Platte 1 ist in einer Buchse 2 geführt eine Säule 3 hindurchgeführt und ragt ein Stück über das hintere Ende der Platte 1 hinaus. Von dem Ende der Säule beabstandet weist die Säule eine Ringnut auf, in die zwei Halbringe 6a und 6b eingesetzt und untereinander verbunden sind. Diese Halbringe 6a und 6b bilden zusammen den Kopf 6 der Säule. Auf der Rückseite der Platte 1 ist ein insgesamt mit dem Bezugszeichen 4 gekennzeichnetes Druckkissen vorgesehen. Das Druckkissen 4 umfasst einen Zylinder 5, der vorliegend aus den Zylinderbestandteilen 5a und 5b zusammengesetzt und an der Platte 1 befestigt ist. Im Innern des Zylinders 5 ist eine aus mehreren Teilen 7a und 7b zusammengesetzte Hülse 7 axial beweglich aufgenommen. Die Hülse 7 weist einen Abschnitt A auf, welcher den Kolben des Druckkissens 4 bildet, und zu beiden Seiten des Kolbens ist jeweils einen Endabschnitt B und C vorhanden.

Der Zylinder 5 weist an seinen beiden Stirnseiten 8a und 8b Öffnungen auf, deren Durchmesser größer ist als der Durchmesser der diesem Druckkissen 4 zugeordneten Säule 3, wobei zwischen der Säule 3 und dem Zylinder 5 im Bereich der beiden Stirnseiten des Zylinders 5 jeweils ein Ringspalt 9a und 9b gebildet wird.

Die Hülse 7 ist derart ausgebildet, dass sich der eine Endabschnitt B in den einen Ringspalt 9a und der andere Endabschnitt C in den anderen Ringspalt 9b hinein erstreckt. In dem hier dargestellten Beispiel weist der Endabschnitt C eine solche Länge auf, dass die Hülse 7 mit diesem Endabschnitt C durch den Ringspalt 9b hindurchgeht und um ein Stück aus der Stirnseite 8b des Zylinders 5 hinausragt.

Während auf der einen Seite des Kopfstücks 6 die Hülse 7 auf der Säule 3 angeordnet ist, ist auf der anderen Seite des Kopfstücks 6 ein mit der Hülse 7 verbindbares Fixierelement 10 vorgesehen und mittels Schrauben 11 formschlüssig mit der Hülse 7 verbunden. Im verbundenen Zustand wird also eine formschlüssige Verbindung 12 zwischen Hülse 7, Kopfstück 6 und Fixierelement 10 gebildet. Im Ergebnis ist somit die Säule 3 formschlüssig mit der Hülse 7 verbunden.

Der Abschnitt A der Hülse 7, der den Kolben des Druckkissens 4 bildet, teilt den Zylinder 5 in einen ersten ringförmigen Hydraulik- bzw. Druckraum 13a und einen zweiten ringförmigen Hydraulik- bzw. Druckraum 13b. Somit werden zu beiden Seiten des Kolbens zwei kreisringförmige mit Druckmittel beaufschlagbare Flächen F₁ und F₂ unterschiedlicher Größe gebildet, wobei die größere der beiden Flächen, nämlich die Fläche F₁, zur Erzeugung einer Schließkraft und die kleinere der beiden Flächen, nämlich die Fläche F₂, zur Erzeugung einer Aufreißkraft vorgesehen sind.

Die Hülse 7 bewirkt, dass das Hydrauliköl in den beiden Druckräumen 13a und 13b nicht mit der Säule 3 in Kontakt kommen kann. Das Lösen der Verbindungen 12 erlaubt den Ausbau der Säule 3 ohne Öffnung der Druckräume 13a und 13b und somit ohne Öffnung der Ölräume. Es ist lediglich das Fixierelement 10 von der Hülse 7 zu entfernen. Danach kann die Säule 3 mit ihrem Kopf 6 in der Figur nach rechts bewegt werden, wie dies mit dem großen Pfeil P veranschaulicht werden soll.

Das erfindungsgemäß ausgebildete Druckkissen kann sowohl bei einer Zwei-Platten-Schließvorrichtung als auch bei einer Drei-Platten-Schließvorrichtung vorgesehen werden. Bei einer Zwei-Platten-Schließvorrichtung kann das erfindungsgemäß ausgebildete Druckkissen an der feststehenden oder an der beweglichen Formaufspannplatte vorgesehen werden. An dem dem Druckkissen gegenüberliegenden Ende der Säule können an sich bekannte Verriegelungseinrichtungen vorgesehen werden. Beispielsweise könnte die in der Figur gezeigte Säule an ihrem anderen, in der Figur nicht sichtbaren Ende, mit Rillen ausgestattet sein, in die passend ausgebildete Verriegelungsbacken ein- und ausgefahren werden können.

### Bezugszeichenliste

- 1: Platte
- 2: Buchse
- 3: Säule
- 4: Druckkissen
- 5: Zylinder
- 5a, 5b: Zylinderbestandteile
- 6: Kopf der Säule 3
- 6a, 6b: Halbringe
- 7: Hülse
- 7a, 7b: Teile der Hülse 7
- 8a, 8b: Stirnseiten des Zylinders 5
- 9a: Erster Ringspalt
- 9b: Zweiter Ringspalt
- 10: Fixierelement
- 11: Schraubverbindunden
- 12: Verbindung
- A: Den Kolben bildender Abschnitt der Hülse 7
- B, C: Endabschnitte der Hülse 7
- F₁, F₂: Wirksame Kolbenflächen
- P: Bewegungsrichtung beim Säulenziehen

## Patentansprüche

1. Zwei-Platten-Schließvorrichtung für eine Spritzgießmaschine, mit einer feststehenden und einer beweglichen Formaufspannplatte, mit Antriebsmitteln zum Verfahren der beweglichen Formaufspannplatte relativ zur feststehenden Formaufspannplatte, mit Säulen zwischen den beiden Formaufspannplatten und mit Druckkissen zur Erzeugung einer Schließkraft, wobei die Druckkissen jeweils einen Zylinder und einen darin verschiebbaren, mit einer Säule in Verbindung stehenden Kolben aufweisen, und wobei die Druckkissen an einer der beiden Formaufspannplatten und Verriegelungselemente an der anderen der beiden Formaufspannplatten vorgesehen sind, wobei bei einem oder mehreren der Druckkissen (4) der Zylinder (5) an seinen beiden Stirnseiten (8a, 8b) jeweils eine Öffnung aufweist, deren Durchmesser größer ist als der Durchmesser der diesem Druckkissen (4) zugeordneten Säule (3), wobei zwischen der Säule (3) und dem Zylinder (5) im Bereich der beiden Stirnseiten (8a, 8b) des Zylinders jeweils ein Ringspalt (9a, 9b) gebildet wird, und dass eine Hülse (7) vorgesehen ist, wobei die Hülse (7) mit der Säule lösbar verbindbar ist, wobei die Hülse (7) einen Abschnitt (A) aufweist, weicher den Kolben bildet, und wobei die Hülse (7) zu beiden Seiten des Kolbens jeweils einen Endabschnitt (B, C) aufweist, der sich bis in einen der Ringspalte (9a, 9b) hinein erstreckt, **dadurch gekennzeichnet, dass** die Säule (3) durch die Hülse (7) hindurchführbar ist.

2. Schließvorrichtung nach Anspruch 1,
**dadurch gekenntzeichnet, dass**
die Hülse (7) formschlüssig mit der Säule (3) verbindbar ist.

3. Schließvorrichtung nach Anspruch 1 oder 2,
**dadurch gekenntzeichnet, dass**
die Hülse (7) aus mehreren miteinander verbindbaren Teilen (7a, 7b) aufgebaut ist.

4. Schließvorrichtung nach Anspruch 3,
**dadurch gekennzeichnet, dass**
ein erstes Teil (7b) der Hülse (7) den Kolben (A) und einen der beiden Endabschnitte (C) bildet und dass ein zweites Teil (7a) der Hülse (7) den anderen der beiden Endabschnitte (B) bildet.

5. Schließvorrichtung nach einem der vorstehenden Ansprüche,
**dadurch gekennzeichnet, dass**
die Säule (3) an einem Ende ein Kopfstück (6) mit einem größeren Durchmesser als die Säule (3) selbst aufweist, wobei auf der einen Seite des Kopfstücks (6) die Hülse (7) auf der Säule (3) vorgesehen ist und auf der anderen Seite des Kopfstücks (6) ein mit der Hülse (7) verbindbares Fixierelement (10), so dass im verbundenen Zustand eine formschlüssige Verbindung zwischen Hülse (7), Kopfstück (6) und Fixierelement (10) gebildet wird.

6. Schließvorrichtung nach Anspruch 5,
**dadurch gekennzeichnet, dass**
das Kopfstück (6) von zwei halben Ringen (6a, 6b) gebildet wird, die in eine in der Säule vorgesehene Ringnut eingesetzt und untereinander verbunden sind.

7. Schließvorrichtung nach Anspruch 5,
**dadurch gekennzeichnet, dass**
das Kopfstück (6) von zwei Halbschalen gebildet wird, wobei die Halbschalen jeweils mehrere halbkreisförmige Vorsprünge aufweisen, die passend zu einer entsprechenden Anzahl und Form von Ringnuten in der Säule ausgebildet sind, und wobei die Halbschalen mit ihren Vorsprüngen in die Ringnuten eingesetzt und untereinander verbunden sind.

8. Schließvorrichtung nach einem der Ansprüche 1 bis 7,
**dadurch gekennzeichnet, dass**
zu beiden Seiten des Kolbens (A) zwei kreisringförmige mit Druckmittel beaufschlagbare Flächen (F₁, F₂) unterschiedlicher Größe vorliegen, wobei die größere der beiden Flächen (F₁) zur Erzeugung einer Schließkraft und die kleinere der beiden Flächen (F₂) zur Erzeugung einer Aufreißkraft vorgesehen sind.

9. Schließvorrichtung nach einem der Ansprüche 1 bis 7,
**dadurch gekennzeichnet, dass**
zu beiden Seiten des Kolbens (A) zwei kreisringförmige mit Druckmittel beaufschlagbare Flächen (F₁, F₂) gleicher Größe vorliegen.

## Claims

1. A two-platen closing device for an injection moulding machine, with a stationary and a movable mould platen, with driving means for moving the movable mould platen relative to the stationary mould platen, with columns between the two mould platens and with pressure pads for generating a closing force, wherein the pressure pads respectively have a cylinder and a piston which can be moved therein and which is connected to a column, and wherein the pressure pads are provided on one of the two mould platens and locking elements are provided on the other of the two mould platens, wherein in the case of one or several of the pressure pads (4) the cylinder (5) has at its two face sides (8a, 8b) respectively an opening, the diameter of which is greater than the diameter of the column (3) associated with this pressure pad (4), wherein between the column (3) and the cylinder (5) in the region of the two face sides (8a, 8b) of the cylinder respectively an annular gap (9a, 9b) is formed, and that a sleeve (7) is provided, wherein the sleeve (7) is able to be detachably connected to the column, wherein the sleeve (7) has a portion (A) which forms the piston, and wherein the sleeve (7) has on both sides of the piston respectively an end portion (B, C), which extends into one of the annular gaps (9a, 9b), **characterized in that** the column (3) is able to be directed through the sleeve (7).

2. The closing device according to Claim 1,
**characterized in that**
the sleeve (7) is able to be connected to the column (3) in a form-fitting manner.

3. The closing device according to Claim 1 or 2,
**characterized in that**
the sleeve (7) is composed of a plurality of parts (7a, 7b) which are able to be connected to one another.

4. The closing device according to Claim 3,
**characterized in that**
a first part (7b) of the sleeve (7) forms the piston (A) and one of the two end portions (C) and that a second part (7a) of the sleeve (7) forms the other of the two end portions (B).

5. The closing device according to one of the preceding claims,
**characterized in that**
the column (3) has at one end a head piece (6) with a greater diameter than the column (3) itself, wherein on the one side of the head piece (6) the sleeve (7) is provided on the column (3), and on the other side of the head piece (6) a fixing element (10) is provided, which is able to be connected to the sleeve (7), so that in the connected state a form-fitting connection is formed between sleeve (7), head piece (6) and fixing element (10).

6. The closing device according to Claim 5,
**characterized in that**
the head piece (6) is formed from two half rings (6a, 6b), which are inserted into an annular groove provided in the column, and are connected to one another.

7. The closing device according to Claim 5,
**characterized in that**
the head piece (6) is formed from two half shells, wherein the half shells respectively have a plurality of semi-circular projections, which are configured matching a corresponding number and shape of annular grooves in the column, and wherein the half shells are inserted with their projections into the annular grooves and are connected to one another.

8. The closing device according to one of Claims 1 to 7,
**characterized in that**
on both sides of the piston (A) two annular faces (F₁, F₂) of differing size are present which are able to be acted upon by pressure medium, wherein the larger of the two faces (F₁) is provided for generating a closing force, and the smaller of the two faces (F₂) is provided for generating an opening force.

9. The closing device according to one of Claims 1 to 7,
**characterized in that**
on both sides of the piston (A) two annular faces (F₁, F₂) of identical size are present which are able to be acted upon by pressure medium.

## Revendications

1. Dispositif de fermeture à deux plateaux pour une machine de moulage par injection comprenant un plateau de serrage de moule fixe et un plateau de serrage de moule mobile, comprenant des moyens d'entraînement pour déplacer le plateau de serrage de moule mobile par rapport au plateau de serrage de moule fixe, comprenant des colonnes entre les deux plateaux de serrage de moule et des coussinets de pression pour produire une force de fermeture, dans lequel les coussinets de pression présentent respectivement un cylindre et un piston pouvant être poussé dedans, étant en liaison avec une colonne, et dans lequel les coussinets de pression sont prévus sur un des deux plateaux de serrage de moule et des éléments de verrouillage sont prévus sur l'autre des plateaux de serrage de moule, dans lequel pour un ou plusieurs des coussinets de pression (4), le cylindre (5) présente respectivement une ouverture sur ses deux faces avant (8a, 8b), dont le diamètre est supérieur au diamètre de la colonne (3) correspondant à ce coussinet de pression (4), dans lequel une fente annulaire (9a, 9b) respective est formée entre la colonne (3) et le cylindre (5) au niveau des deux faces avant (8a, 8b) et qu'un manchon (7) est prévu, dans lequel le manchon (7) peut être relié à la colonne de façon séparable, dans lequel le manchon (7) présente un tronçon (A) qui forme le piston, et dans lequel le manchon (7) présente respectivement un tronçon d'extrémité (B, C) de chaque côté du piston, qui s'étend jusque dans l'intérieur d'une des fentes annulaires (9a, 9b), **caractérisé en ce que** la colonne (3) peut être passée au travers du manchon (7).

2. Dispositif de fermeture selon la revendication 1, **caractérisé en ce que** le manchon (7) peut être relié à la colonne (3) par complémentarité de formes.

3. Dispositif de fermeture selon la revendication 1 ou 2, **caractérisé en ce que** le manchon (7) est constitué de plusieurs parties (7a, 7b) pouvant être reliées entre elles.

4. Dispositif de fermeture selon la revendication 3, **caractérisé en ce qu'**une première partie (7b) du manchon (7) forme le piston (A) et un des deux tronçons d'extrémité (C) et qu'une seconde partie (7a) du manchon (7) forme l'autre des deux tronçons d'extrémité (B).

5. Dispositif de fermeture selon l'une des revendications précédentes, **caractérisé en ce que** la colonne (3) présente à une extrémité, une têtière (6) avec un diamètre plus grand que la colonne (3) elle-même, dans lequel le manchon (7) est prévu sur la colonne (3) sur l'un côté de la têtière (6), et sur l'autre côté de la têtière (6) est prévu un élément de fixation (10) pouvant être relié au manchon (7), de sorte que dans l'état lié, une liaison par complémentarité de formes est formée entre le manchon (7), la têtière (6) et l'élément de fixation (10).

6. Dispositif de fermeture selon la revendication 5, **caractérisé en ce que** la têtière (6) est formée par deux demi-bagues (6a, 6b) qui sont insérées dans une fente annulaire prévue dans la colonne et sont reliées entre elles.

7. Dispositif de fermeture selon la revendication 5, **caractérisé en ce que** la têtière (6) est formée par deux demi-coques, dans lequel les demi-coques présentent respectivement plusieurs saillies semi-circulaires qui sont conçus en étant adaptées à une forme et un nombre correspondants de fentes annulaires dans la colonne, et dans lequel les demi-coques sont insérées par leurs saillies dans les fentes annulaires et sont reliées entre elles.

8. Dispositif de fermeture selon l'une des revendications 1 à 7, **caractérisé en ce que** de chaque côté du piston (A) sont présentes deux surfaces (F₁, F₂) annulaires de grandeurs différentes pouvant être alimentées par un fluide sous pression, dans lequel la plus grande des deux surfaces (F¹) est prévue pour produire une force de fermeture et la plus petite des deux surfaces (F₂) est prévue pour produire une force d'ouverture en grand.

9. Dispositif de fermeture selon l'une des revendications 1 à 7, **caractérisé en ce que** de chaque côté du piston (A) sont présentes deux surfaces (F₁, F₂) annulaires de grandeur égale pouvant être alimentées par un fluide sous pression.
